# EUROPÄISCHE PATENTSCHRIFT

(11) **EP 0 325 203 B1**
(45) Veröffentlichungstag und Bekanntmachung des Hinweises auf die Patenterteilung: **08.09.1993**
(21) Anmeldenummer: 89100725.4
(22) Anmeldetag: 17.01.1989
(51) Int. Cl.: H01G 9/05

(54) **Verfahren zum Herstellen einer Mangandioxidschicht von Fest-Elektrolytkondensatoren**
Method for making a layer of manganese dioxide of solid electrolyte capacitors
Procédé de fabrication d'une couche en dioxyde de manganèse de condensateurs à électrolyte solide

(30) Priorität: 21.01.1988 DE 3801729
(43) Veröffentlichungstag der Anmeldung: 26.07.1989
(73) Patentinhaber: SIEMENS AKTIENGESELLSCHAFT, 80333 München (DE)
(72) Erfinder: Auer, Heinz, Dr. Dipl.-Phys, D-7920 Heidenheim 8 (DE); Winkler, Gernot, Dipl.-Phys, D-7920 Heidenheim 9 (DE)

(56) Entgegenhaltungen:
- DE-B- 1 289 186
- FR-A- 1 540 654
- US-A- 3 950 842

## Beschreibung

Die Erfindung betrifft ein Verfahren zum Herstellen einer Mangandioxidschicht von Fest-Elektrolytkondensatoren mit einem gesinterten Anodenkörper aus einem Ventilmetall, einer auf dem Anodenkörper angeordneten als Dielektrikum dienenden Oxidschicht, einer halbleitenden Elektrolytschicht aus Mangandioxid, die durch wiederholtes Tauchen in eine Mangannitrat enthaltende Lösung und anschließende pyroly tische Zersetzung hergestellt wird, einer auf der Mangandioxidschicht angeordneten Graphitschicht und einer hierauf angeordneten weichlötfähigen Schicht.

Die Sinterkörper aus einem geeigneten Ventilmetall wie z. B. Tantal oder Niob werden in einem anodischen Oxidationsprozeß auf der inneren und äußeren Oberfläche mit der als Dielektrikum dienenden Oxidschicht überzogen. Die Mangandioxidschicht in und auf den Sinterkörpern dient als Gegenelektrode, und die darauffolgende Graphitschicht und eine weichlötfähige Schicht (z. B. aus Silberleitlack) stellen den Kontakt zum negativen Anschluß des Kondensators her. Als positiver Anschluß dient ein in den Sinterkörper mit eingesinterter Draht aus Ventilmetall.

Aus der DE-B-1289186 ist ein Verfahren bekannt, bei dem wenigstens eine erste Mangandioxidschicht durch thermische Zersetzung einer wäßrigen, weniger als etwa 60 Gew% wasserfreies Mangannitrat enthaltenden Lösung gebildet wird. Zu nachfolgenden Beschichtungen können Schmelzen von Mn(NO₃)₂ . 6 H₂O oder Mn(NO₃)₂ . 4 H₂O verwendet werden.

Weiterhin ist es aus der US-A-3,150,842 bekannt, nach dem Herstellen einer ersten Mangandioxidschicht durch Pyrolyse einer Mangansalz-Lösung eine weitere Mangandioxidschicht durch Pyrolyse eines Gemischs von mangansalzhaltigen Lösungen mit darin enthaltenen Mangandioxidpartikeln herzustellen.

Tantal-Fest-Elektrolytkondensatoren zeichnen sich durch große Lebensdauer bei gleichzeitig geringer Temperaturabhängigkeit von Kapazität, Reststrom, Verlustfaktor und Scheinwiderstand aus. Die zuverlässigste Ausführung ist hierbei die hermetisch dichte Bauform, bei der der Kondensator in einem Metallgehäuse durch Weichlot und einer Abschlußglasscheibe vor Feuchtigkeit vollkommen geschützt ist.

Bei Ausführungsformen mit Kunststoffgehäuse ist neben höherer mechanischer Belastung über die thermische Ausdehnung des Gehäuses ein absoluter Schutz vor Feuchtigkeit nicht gegeben.

Kunststoffumhüllungen weisen grundsätzlich eine Wasserdampf-Diffusion auf, wodurch eventuell störende Ionen vom diffundierenden Wasser aktiviert werden können.

Es ist deshalb erforderlich, kunststoffumhüllte Kondensatoren durch ihren inneren Aufbau gegen Feuchteeinflüsse resistenter zu machen. Als Maß für die Zuverlässigkeit kann hierbei der Reststrom des Kondensators nach Dauerversuchen mit strengen klimatischen Bedingungen herangezogen werden. So soll beispielsweise bei einem 20 µF/20 V-Kondensator der Reststrom nach einem Dauerversuch (85°C, 95 % relative Feuchte, Nennspannungsbetrieb ohne Vorwiderstand) 30 µA nicht übersteigen (Reststrommessung bei Raumtemperatur).

Günstig ist es hierfür, daß die geringe Reaktivität der Tantalpentoxidschicht die Verwendung von Elektrolyten hoher Leitfähigkeit mit dem Ergebnis geringer Ersatzserienwiderstände gestattet. Jedoch muß bei Tantal-Fest-Elektrolytkondensatoren der Kathodenbelag eine ausreichende Schichtdicke aus Mangandioxid aufweisen, um das Dielektrikum vor direktem Kontakt mit Graphit und Leitlack zu schützen, da Graphit oder Leitlack direkt auf der Tantalpentoxidschicht bekanntlich schon bei wenigen Prozent der Formierspannung zu Kurzschlüssen führt.

Zur Herstellung der Mangandixidschichten werden daher in bekannter Weise die formierten Sinterkörper in Mangannitrat getaucht, wodurch die dielektrische Oberfläche mit Mangannitrat benetzt wird. Darauf folgt eine thermische Zersetzung (Pyrolyse) des Mangannitrates bei Temperaturen von 200 - 350°C, wobei MnO₂ in und auf den Sinterkörpern entsteht. Durch Wiederholen (8 bis 15 x) dieser Pyrolyse in trockener oder wasserdampfhaltiger Luft bildet sich eine mehrlagige MnO₂-Schicht, die für ausreichenden Abstand der gutleitenden Graphitschicht und der folgenden weichlötfähigen Schicht sorgt.

Diese herkömmlich hergestellten Mangandioxidschichten sind für normale Anforderungen ausreichend. So wiesen derartige Kondensatoren bei Dauerversuchen mit erhöhter Temperatur und Betriebsspannung über der Nennspannung (125°C, U_{N}; 105°C, U_{N}. 1,35), jedoch ohne Luftfeuchte, gute Ergebnisse auf (nur ca. 1 % derart behandelter Kondensatoren hatten einen Reststrom > 30 µA).

Bei Dauerversuchen mit hoher Luftfeuchte (1.000 Stunden bei 85°C und 95% relativer Feuchte, U_{N}) hatten derartige Kondensatoren jedoch eine verminderte Zuverlässigkeit (ca. 10% der Kondensatoren mit einem Reststrom > 30 µA, wobei der größte Teil davon einen Kurzschluß aufwies).

Während bei den Dauerversuchen in trockener Luft die vereinzelt auftretenden Ausfälle typische Frühausfälle darstellen, die auf versteckte Produktionsfehler oder Materialverunreinigungen zurückzuführen sind, liegen den Ausfällen bei Dauerversuchen mit hoher Luftfeuchte Fehler zugrunde, die im Kondensatoraufbau zu suchen sind. Mit zunehmender Verweildauer in Feuchte steigt die Zahl der Ausfälle oft über das zulässige Maß an. Bei vergleichbar hergestellten Kondensatoren mit vergleichbarer Ladung und Nennspannung, jedoch im Metallgehäuse dicht eingebaut, ist kein Einfluß der Feuchte im Dauerversuch festzustellen.

Die Ursachen für das Versagen der Sperrwirkung der amorphen Tantalpentoxidschicht liegen in dieser selbst oder in einer mangelhaften Mangandioxidschicht. Erhöhte Verunreinigungen in der Oxidschicht stören die Sperrwirkung und führen durch lokal hohen Reststrom zur Ausbildung des kristallinen Zustandes, der, wenn er sich über die Gesamt-Dielektrikumsdicke erstreckt, sofort zum Kurzschluß führt. Liegen kristalline Inseln in der Oxidschicht, so stellen diese ausfallgefährdete Bereiche dar, die aber gegebenenfalls durch lokale Umwandlung des Mangandioxid in die schlechter leitende Oxidationsstufe (MnO₂→Mn₂O₃, ρ (MnO₂) ∼ 1 - 10 Ohm . cm, ρ (Mn₂O₃) ∼ 10⁴ - 10⁵ Ohm . cm) über einen erhöhten Widerstand geschützt werden können.

Diese Ausfallmechanismen durch störende Verunreinigungen der Oxidschicht kommen allerdings als alleinige Ursache bei den Ausfällen in Feuchte nicht infrage, da die Überprüfung der Tantalpentoxidschicht ergibt, daß diese von der Formierung und von ihrem Aufbau her in Ordnung ist. Erhöhte Restströme aufgrund von Verunreinigungen oder fehlerhaftem Aufbau der Oxidschichten sind nicht festgestellt worden.

Die Ausfallursache ist demnach in der Mangandioxidschicht zu suchen, die aufgrund des ungenügenden Feuchteschutzes des Kunststoffgehäuses ungünstige Einwirkungen auf das Sperrstromverhalten des Dielektrikums ermöglicht.

Diese Einwirkungen können Graphit- und Leitlackpartikel sein, die durch Poren der Mangandioxidschicht eindringen, und die den Widerstand des Kathodenbelages an einzelnen Stellen vor dem Dielektrikum herabsetzen. Durch das Gehäuse diffundierender Wasserdampf begünstigt eine einfache Diffusion (Stofftransport durch Fließbewegung größerer Volumenelemente) von weniger gut haftenden Graphit- und Silberpartikeln und kann so durch zu geringen Vorwiderstand vor dem Dielektrikum zu einem Kurzschluß führen. Bei dem als weichlötfähige Schicht verwendetem Silberleitlack sind die Silberpartikel in einem organischen Binder eingemengt, der eine begrenzte Temperaturbelastbarkeit aufweist. Schon bei einer geringen Überhitzung ist eine beginnende thermische Zerstörung des Leitlacks und somit eine mechanische Freisetzung von Silberpartikeln gegeben. Auch führt eingedrungenes Wasser zu besserem Kontakt zwischen dem Dielektrikum und der Mangandioxidschicht mit dem Ergebnis, daß durch Mangandioxid nicht kontaktierte eventuell defekte Stellen des Dielektrikums zusätzlich kontaktiert werden. Fällt deshalb eine sonst nicht störende lokale Fehlstelle der Tantalpentoxidschicht mit einer Stelle zu geringen Vorwiderstandes zusammen, ist eine potentielle Ausfallstelle gegeben. Lokal erhöhter Reststrom führt durch Erwärmung in Gegenwart des elektrischen Feldes zur weiteren Feldkristallisation und somit zum Kurzschluß.

Durch Graphit, Silberpartikel und Wasser verunreinigte Gebiete in der Mangandioxidschicht, die dicht am Dielektrikum liegen, kann die Wirkung des Ausheilmechanismus durch den Übergang MnO₂ →Mn₂O₃ unwirksam werden, so daß der hohe spezifische Widerstand von Mn₂O₃ verlorengeht.

Aus den vorstehend aufgezeigten Gründen ist es deshalb erforderlich, ausreichend dicke, glatte und porenarme Mangandioxidschichten zu erzeugen.

Da bekannt ist, daß infolge der thermischen Belastung durch die Pyrolyse eine Schädigung der Dielektrikumsschicht eintreten kann, könnte gefolgert werden, daß die Herstellung der Mangandioxidschicht durch Tauchen in hochkonzentrierte Mangannitratlösungen erzeugt werden kann. Hierbei sind zwar zur Herstellung einer bestimmten Schichtdicke weniger Tauch- und Pyrolyse-Vorgänge erforderlich, jedoch werden hierbei nicht ausreichend glatte und porenarme Mangandioxidschichten erhalten, da insbesondere bei einer Pyrolyse ohne Vortrocknung große Poren in den äußeren Mangandioxidschichten durch das Entweichen des nitrosen Gases aus weiter innenliegenden Bereichen hervorgerufen werden. Bei stärker verdünnten Lösungen ist die Gefahr der Porenbildung gering, jedoch sind, wie eingangs erwähnt, zur Herstellung einer ausreichend dicken Mangandioxidschicht ca. 8 bis 15 einzelne Tauch-und Pyrolysevorgänge erforderlich, um den ausreichenden Abstand der gutleitenden Graphitschicht und der folgenden weichlötfähigen Schicht von der Oxidschicht zu gewährleisten.

Die thermische Zersetzung in trockener Luft bei 200 bis 350°C führt zwar schon nach wenigen Pyrolysen zu dicken Mangandioxidschichten mit Abmessungen von 0,1 mm und mehr, jedoch sind diese hochporös und locker und ermöglichen aufgrund zu großer Porosität keinen ausreichenden Abstand der Graphitschicht zum Dielektrikum. Zersetzungen in wasserdampfhaltiger Luft bei Temperaturen von 200 - 250 °C führen dagegen zu glatteren, porenärmeren und festeren Mangandioxidschichten, jedoch sind hierbei zur Erzielung einer ausreichenden Schichtdicke eine hohe Anzahl von Tauch- und anschließenden Pyrolyseprozessen erforderlich.

Durch abwechselnde Zersetzung in trockener und wasserdampfhaltiger Luft entstehen nach 8 bis 15 maligem Wiederholen Mangandioxidschichten, die zu brauchbaren elektrischen Größen des Kondensators führen. Jedoch sind hierbei immer noch eine hohe Anzahl dielektrikumsbeeinträchtigender Pyrolyseschritte erforderlich.

Der Erfindung liegt daher die Aufgabe zugrunde, ein Verfahren anzugeben, durch das mit einer kleineren Zahl thermischer Zersetzungen ausreichend dicke und porenarme Mangandioxidschichten auf den Sinterkörpern hergestellt werden können.

Diese Aufgabe wird durch ein Verfahren mit den Merkmalen des Anspruchs 1 gelöst.

Für bestimmte Anwendungsfälle ist es vorteilhaft, die Sinterkörper vor dem Eintauchen in die Mischung aus einer wasserarmen Schmelze von Mangannitrat und Mangandioxidpulver, ein- oder mehrmals in eine wasserarme Mangannitrat-Schmelze ohne Mangandioxidzusatz einzutauchen und nach jeder Tauchung einer gleichartigen Pyrolyse wie nach der Tauchung in die Mischung zu unterziehen.

Zweckmäßigerweise wird der Wasserdampfnebel durch im Ofen angeordnete Luftleitbleche derart geführt, daß ein Abwaschen der Sinterkörper durch den Strahl der Wassertröpfchen verhindert wird.

Besonders vorteilhaft ist es, wenn die Sinterkörper ohne Vortrocknen in den Ofen eingebracht werden.

Nach Auffüllung der Poren im Innern der Sinterkörper in gegebenenfalls mehreren Tauch- und Pyrolyseschritten kann vor dem Herstellen der Mangandioxidschichten aus wasserarmer Mangannitratschmelze eine Zwischenformierung durchgeführt werden.

Die zur Auffüllung der Poren verwendete Mangannitratlösung besitzt vorzugsweise eine Dichte von ca. 1,1 bis 1,4 g/cm³, während die wasserarme Mangannitratschmelze, beispielsweise eine Schmelze von Tetrahydrat ((Mn(NO3)₂ x 4 H₂O), eine Dichte von ca. 1,8 bis 2,0 g/cm³ besitzt.

Der Zusatz an Mangandioxidpartikeln beträgt vorzugsweise 40 bis 60 Gewichtsprozent, wobei die verwendeten Mangandioxidpartikel eine Korngröße ≦ 180 µm aufweisen.

Eine Weiterbildung sieht vor, daß zumindest einer der Mangannitratlösungen und/oder Schmelzen Siliciumdioxid, vorzugsweise 0,5 bis 10 Gewichtsprozent, zugesetzt wird, das bevorzugt durch Knallgashydrolyse aus SiCl₄ hergestellt ist und z.B. eine Teilchengröße von 7 bis 40 nm besitzt.

Die Vorteile des Gegenstandes der Erfindung werden anhand der folgenden Ausführungsbeispiele näher erläutert.

In der dazugehörenden Zeichnung zeigen
- Figur 1: Reststromverteilungen von herkömmlichen und erfindungsgemäß hergestellten Kondensatoren nach Dauerversuchen an Spannung und
- Figur 2: Reststromverteilungen von herkömmlichen und erfindungsgemäß hergestellten Kondensatoren nach spannungsloser Lagerung in Wasserdampf.

Formierte Tantal-Sinterkörper werden in wäßrige Mangannitratlösung der Dichte von ca. 1,3 g/cm³ getaucht und anschließend in wasserdampfhaltiger Atmosphäre bei 200 bis 350 °C pyrolysiert. Eine bis drei derartiger Pyrolysen führen zu einem nahezu vollständigen Auffüllen der Poren in den Sinterkörpern mit Mangandioxid.

Je nach Größe der Poren des Sinterkörpers kann es zweckmäßig sein, der Mangannitratlösung als thixotropes Verdickungsmittel amorphes Siliciumdioxid zuzusetzen, das durch Knallgashydrolyse eine große aktive Oberfläche aufweist. Derartiges Siliciumdioxid ist handelsüblich und beispielsweise unter dem Namen "Aerosil" erhältlich.

Als Zusatzmengen eignen sich 0,5 bis 10 Gewichtsprozent Siliciumdioxid mit einer Teilchengröße von 7 bis 40 nm.

Anschließend an die Pyrolysevorgänge werden die Sinterkörper einem anodischen Reformierprozeß unterzogen, um durch die Hitzeeinwirkung entstandene Schädigungen der Oxidschicht zu beseitigen.

Nachdem die Poren in den Sinterkörpern in der geschilderten Weise nahezu aufgefüllt sind, werden die Sinterkörper in eine wasserarme Mangannitratschmelze von Mn (NO₃)₂ · 4 H₂O mit einer Dichte von beispielsweise 1,8 g/cm³ getaucht, um weitere Mangandioxidschichten durch Pyrolyse herzustellen.

Der Mangannitratschmelze können 40 bis 60 Gewichtsprozent MnO₂-Pulver (β MnO₂) und gegebenenfalls 0,5 bis 10 Gewichtsprozent amorphes Siliciumdioxid mit den weiter oben geschilderten Eigenschaften zugemischt werden.

Das MnO₂-Pulver weist bevorzugt folgende Korngrößen auf:
<180 µm 99,9 %
75 - 180 µm 5,0 %
45 - 75 µm 10,0 %
<45 µm 85,0 %.

Eine bevorzugte Mischung besteht aus 60 Gewichtsprozent Mn (NO₃)₂ · 4 H₂O und 40 Gewichtsprozent MnO₂, denen 0,5 Gewichtsprozent SiO₂-Pulver zugemischt ist. Durch Zugabe von destilliertem Wasser kann die Dichte der Mischung beispielsweise auf 2,0 g/cm³ eingestellt werden.

Die in diese Mischung getauchten Sinterkörper werden anschließend ohne Vortrocknen in einen Pyrolyseofen eingebracht. Dabei werden zuerst die Sinterkörper in der heißen, trockenen Ofenluft auf ca. 100°C innerhalb weniger Sekunden erwärmt, wobei diese Zeit von der Größe der Sinterkörper abhängig ist. Wesentlich ist hierbei die Erwärmung der Körper auf die genannte Temperatur.

Anschließend werden feine Wassertröpfchen auf die Oberfläche der benetzten Sinterkörper aufgeblasen. Entscheidend hierbei ist, daß ein Teil der durch Druckluft beschleunigten Wassertröpfchen erst nach dem Auftreffen auf die Sinterkörper verdampft und mit den entstehenden nitrosen Gasen aus dem Ofenraum abgesaugt werden. In der Endphase der Pyrolyse befinden sich die Sinterkörper in einem vorbeiströmenden Wasserdampfnebel der Temperatur 200 bis 350°C.

Es ist vorteilhaft, im Ofen durch Luftleitbleche für eine geeignete Luftführung zu sorgen, die das Abwaschen der Sinterkörper durch den Strahl der Wassertröpfchen verhindert.

Durch das schnelle Einfahren der getauchten Sinterkörper in den Ofen, der zunächst nur trockene Luft enthält, erfolgt eine Zersetzung des Mangannitrats in trockener Luft. Hierbei wird durch die wasserarme Mischung wenig Wasser aus den inneren Bereichen der Mischung ausgebracht, und so entsteht teilweise MnO₂, das dem bei der Zersetzung in trockener Luft ähnlich ist.

Das sich in der Anfangsphase der Zersetzung bildende MnO₂ ist aber noch mit Mangannitrat durchsetzt, das erst im weiteren Verlauf der Pyrolyse mit Wasser bzw. Wasserdampf zersetzt wird. Hier entsteht dann durch das von außen erst nach dem Beginn der Zersetzung aufgebrachte Wasser eine glatte und porenarme MnO₂-Schicht.

Die beschriebene Mischung aus Mangannitrat und Mangandioxidpulver ergibt nicht nur einen dickeren Auftrag bei einer Tauchung, sondern sorgt auch durch Entweichen geringerer Gasmengen, bezogen auf die Dicke des die Sinterkörper benetzenden Mangannitrats für eine dichtere MnO₂-Schicht. Die Partikel des zugesetzten MnO₂-Pulvers geben kein Gas ab und werden von dem bei der Pyrolyse entstehenden MnO₂ eingebunden.

Schon eine Pyrolyse dieser Mischung führt somit zu solch einer dicken MnO₂-Schicht, die bei herkömmlicher Pyrolyse erst nach acht bis zehn Zersetzungen erreicht wird. Der Anteil an größeren MnO₂-Körnern führt zu ausreichender mechanischer Stabilität der MnO₂-Schicht auf den Sinterkörpern.

Der geschilderte Zusatz von Siliciumdioxid als thixotropes Verdickungsmittel gewährleistet eine derartige Benetzung der Sinterkörper, daß mit ein bis drei Tauchungen eine ausreichend dicke MnO₂-Schicht (100 bis 250 µm) erreicht wird.

Das zugesetzte Siliciumdioxid erleichtert hierbei nicht nur das Tauchen der Sinterkörper durch die Thixotropierung, sondern sorgt auch aufgrund der aktiven Oberfläche für eine ausgeprägte Adsorption ionogener Verunreinigungen. Diese Adsorption ist vorteilhaft für Kondensatoren, die in ein Kunststoffgehäuse eingebaut werden sollen. Diese Gehäuse bieten nämlich keinen vollständigen Schutz vor eindringender Feuchte. Die durch eingedrungene Feuchtigkeit mobilisierten ionischen Verunreinigungen werden durch das Siliciumdioxid absorbiert und können so weniger zu den Leckströmen beitragen, die durch defekte Stellen im Dielektrikum entstehen.

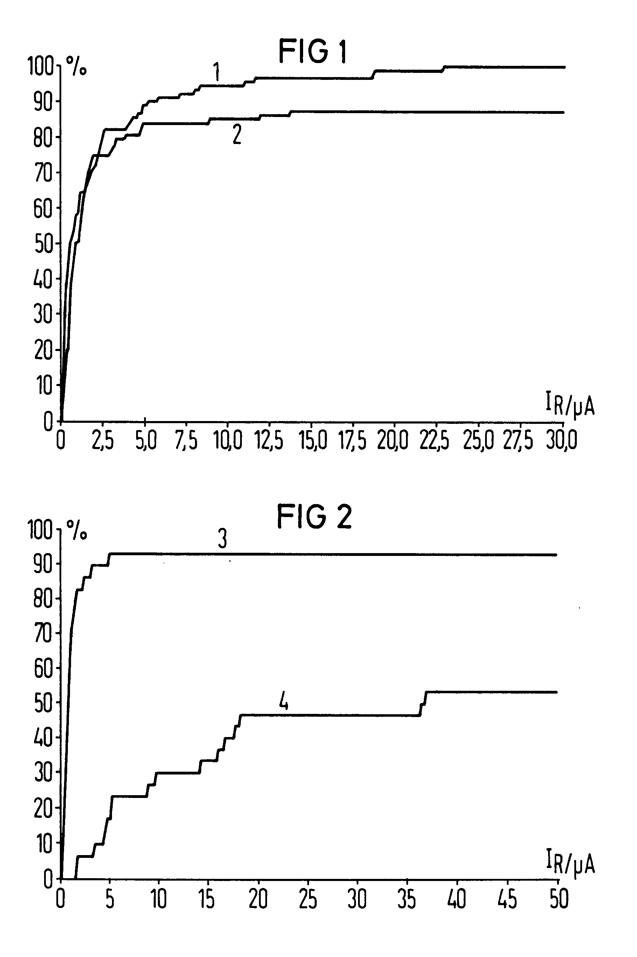

In der Figur 1 ist das Ergebnis eines Dauerversuchs an Kondensatoren der Nenndaten 20 µF/20 V dargestellt, die 1.000 Stunden bei 85°C und 95 % relativer Feuchte gelagert waren. In der Figur 1 sind die Restströme I_{R} in Abhängigkeit der Anzahl von Kondensatoren in Prozent angeführt. Die Kurve 1 bezieht sich hierbei auf Kondensatoren mit einem Kathodenbelag, der nach einem Verfahren gemäß der Erfindung hergestellt wurde, während Kurve 2 sich auf Kondensatoren mit herkömmlichen Kathodenbelägen bezieht.

Der Figur ist zu entnehmen, daß die gemäß der Erfindung hergestellten Kondensatoren keine Ausfälle aufweisen, während von den herkömmlichen Kondensatoren nahezu 15 % ausgefallen sind.

Eine weitere Möglichkeit, extrem zeitraffende Vergleichsversuche bei Kondensatoren durchzuführen, bietet der sogenannte Dampfdrucktest. Hierbei werden die Kondensatoren bei einer Temperatur von ca. 110°C bei einem Druck von ca. 2 bar gelagert.

In der Figur 2 sind die Ergebnisse einer derartigen Dampfdrucklagerung dargestellt, bei denen die Kondensatoren 40 Stunden spannungslos in Wasserdampf bei den genannten Bedingungen gelagert wurden.

Auch in dieser Figur ist die Verteilung der Restströme I_{R} in Abhängigkeit von der Anzahl der Kondensatoren in Prozent angegeben.

Die Kurve 3 bezieht sich auf Kondensatoren, die nach einem Verfahren gemäß der Erfindung hergestellt sind, wogegen sich Kurve 4 auf herkömmliche Kondensatoren bezieht.

Auch unter diesen extremen Bedingungen weisen die erfindungsgemäß hergestellten Kondensatoren nur eine geringe Anzahl von Ausfällen auf ( < 10 %) wogegen von den herkömmlichen Kondensatoren nahezu die Hälfte ausgefallen ist.

Die Restströme, die den Figuren 1 und 2 zugrunde liegen, wurden hierbei bei Raumtemperatur und Nennspannung U_{N} der Kondensatoren bestimmt.

Den vorstehend angeführten Ausführungsbeispielen ist zu entnehmen, daß die erfindungsgemäß hergestellten Mangandioxidschicht glatter und porenärmer als die herkömmlich hergestellten Schichten sind. Durch diese verringerte Porosität im Kathodenbelag wird eine Wanderung leitfähiger Partikel durch Wassereinschluß erschwert, wobei zusätzlich Adsorptionsvorgänge von Siliciumdioxid mit großer aktiver Oberfläche zu verringerter Diffusion führen. Die nach einem Verfahren gemäß der Erfindung hergestellten Kondensatoren eignen sich deshalb in bevorzugter Weise für einen Einbau in Kunststoffgehäuse.

## Patentansprüche

1. Verfahren zum Herstellen einer Mangandioxidschicht von Fest-Elektrolytkondensatoren mit einem gesinterten Anodenkörper aus einem Ventilmetall, einer auf dem Anodenkörper angeordneten als Dielektrikum dienenden Oxidschicht, einer auf der Oxidschicht angeordneten, halbleitenden Elektrolytschicht aus Mangandioxid, die durch wiederholtes Tauchen in eine Mangannitrat enthaltende Lösung bzw. Schmelze und anschließende pyrolytische Zersetzung hergestellt wird, einer auf der Mangandioxidschicht angeordneten Graphitschicht und einer hierauf angeordneten weichlötfähigen Schicht, bei dem zunächst die Poren im Inneren der Sinterkörper durch Pyrolyse von mangannitrathaltigen Lösungen nahezu mit Mangandioxid aufgefüllt werden, wozu die formierten Sinterkörper ein- bis dreimal in Mangannitrat getaucht werden und nach jedem Tauchvorgang die thermische Zersetzung des Mangannitrats bei Temperaturen von 200 - 350°C erfolgt, bei dem dann die Sinterkörper ein- oder mehrmals in eine Mischung getaucht werden, die aus einer wasserarmen Schmelze von Mangannitrat und Mangandioxidpulver besteht und nach jeder Tauchung die Pyrolyse in einem Ofen derart durchgeführt wird, daß zunächst die Sinterkörper in trockener Atmosphäre innerhalb weniger Sekunden auf ca. 100°C aufgeheizt werden und daran anschließend feine Wassertröpfchen auf die Oberfläche der erhitzten Sinterkörper aufgebracht werden und die Pyrolyse in einem vorbeiströmenden Wasserdampfnebel beendet wird.

2. Verfahren nach Anspruch 1, **dadurch gekennzeichnet,** daß die Sinterkörper vor dem Eintauchen in die Mischung aus einer wasserarmen Schmelze von Mangannitrat und Mangandioxidpulver ein- oder mehrmals in eine wasserarme Mangannitrat-Schmelze ohne Mangandioxidzusatz getaucht und nach jeder Tauchung einer gleichartigen Pyrolyse wie nach der Tauchung in die Mischung unterzogen werden.

3. Verfahren nach Anspruch 1 oder 2, **dadurch gekennzeichnet,** daß der Wasserdampfnebel durch im Ofen angeordnete Luftleitbleche derart geführt wird, daß ein Abwaschen der Sinterkörper durch den Strahl der Wassertröpfchen verhindert wird.

4. Verfahren nach einem der Ansprüche 1 bis 3, **dadurch gekennzeichnet,** daß die Sinterkörper ohne Vortrocknen in den Ofen eingebracht werden.

5. Verfahren nach einem der Ansprüche 1 bis 4, **dadurch gekennzeichnet,** daß nach Auffüllung der Poren im Inneren des Sinterkörpers in gegebenenfalls mehreren Tauch-und Pyrolyseschritten vor dem Herstellen der Mangandioxidschichten aus wasserarmer Mangannitratschmelze eine Zwischenformierung durchgeführt wird.

6. Verfahren nach einem der Ansprüche 1 bis 5, **dadurch gekennzeichnet,** daß der Mangannitratschmelze 40 bis 60 Gewichtsprozent Mangandioxidpartikel zugemischt werden.

7. Verfahren nach Anspruch 6, **gekennzeichnet** durch die Verwendung von Mangandioxidpartikeln der Korngröße ≦ 180 µm.

8. Verfahren nach einem der Ansprüche 1 bis 7, **dadurch gekennzeichnet,** daß zur Auffüllung der Poren eine Mangannitratlösung der Dichte von ca. 1,1 bis 1,4 g/cm³ verwendet wird.

9. Verfahren nach einem der Ansprüche 1 bis 8, **gekennzeichnet,** durch die Verwendung einer wasserarmen Schmelze der Dichte von ca. 1,8 bis 2,0 g/cm³.

10. Verfahren nach einem der Ansprüche 1 bis 9, **dadurch gekennzeichnet,** daß zumindest einer der Mangannitratlösungen und/oder Schmelzen Siliciumdioxid zugemischt wird.

11. Verfahren nach Anspruch 10, **dadurch gekennzeichnet,** daß 0,5 bis 10 Gewichtsprozent Siliciumdioxid zugemischt werden.

12. Verfahren nach Anspruch 10 oder 11, **dadurch gekennzeichnet,** daß die Dichte einer wasserarmen Mangannitratschmelze mit Mangandioxid- und Siliciumdioxidzusatz durch Zugabe von destilliertem Wasser auf ca. 2,0 bis 2,6 g/cm³ eingestellt wird.

13. Verfahren nach einem der Ansprüche 10 bis 12, **gekennzeichnet durch** die Verwendung von Siliciumdioxid, das durch Knallgashydrolyse aus SiCl₄ hergestellt ist und eine Teilchengröße von 7 bis 40 nm besitzt.

## Claims

1. Method of producing a manganese dioxide layer for solid-electrolyte capacitors having a sintered anode body made of a valve metal, an oxide layer disposed on the anode body and serving as dielectric, a semiconducting manganese dioxide electrolyte layer which is disposed on the oxide layer and is produced by repeated immersion in a solution or melt containing manganese nitrate followed by pyrolytic decomposition, a graphite layer disposed on the manganese dioxide layer and a soft-solderable layer disposed thereon, in which method the pores in the interior of the sintered body are first virtually filled with manganese dioxide by pyrolysis of solutions containing manganese nitrate, for which purpose the formed sintered bodies are immersed one to three times in manganese nitrate and, after each immersion operation, the manganese nitrate is thermally decomposed at temperatures of 200-350°C, and in which method the sintered bodies are then immersed one or more times in a mixture comprising a low-water melt of manganese nitrate and manganese dioxide powder and, after every immersion, the pyrolysis is carried out in a furnace in such a way that the sintered bodies are first heated to approximately 100°C in a dry atmosphere within a few seconds and, subsequently thereto, fine water droplets are applied to the surface of the heated sintered bodies and the pyrolysis is completed in a passing stream of water vapour mist.

2. Method according to Claim 1, characterised in that, prior to the immersion in the mixture composed of a low-water melt of manganese nitrate and manganese dioxide powder, the sintered bodies are immersed one or more times in a low-water manganese nitrate melt without manganese dioxide added and, after every immersion, are subjected to a pyrolysis similar to that after the immersion in the mixture.

3. Method according to Claim 1 or 2, characterised in that the water vapour mist is passed through air baffle plates disposed in the furnace in such a way that washing-off of the sintered bodies by the jet of water droplets is prevented.

4. Method according to one of Claims 1 to 3, characterised in that the sintered bodies are introduced into the furnace without preliminary drying.

5. Method according to one of Claims 1 to 4, characterised in that, after filling the pores in the interior of the sintered body in, possibly, a plurality of immersion and pyrolysis steps, an intermediate forming is carried out prior to the production of the manganese dioxide layers from low-water manganese nitrate melt.

6. Method according to one of Claims 1 to 5, characterised in that 40 to 60% by weight of manganese dioxide particles are added to the manganese nitrate melt.

7. Method according to Claim 6, characterised by the use of manganese dioxide particles having a particle size of ≦ 180 µm.

8. Method according to one of Claims 1 to 7, characterised in that a manganese nitrate solution having a density of approximately 1.1 to 1.4 g/cm³ is used to fill the pores.

9. Method according to one of Claims 1 to 8, characterised by the use of a low-water melt having a density of approximately 1.8 to 2.0 g/cm³.

10. Method according to one of Claims 1 to 9, characterised in that silicon dioxide is added to at least one of the manganese nitrate solutions and/or melts.

11. Method according to Claim 10, characterised in that 0.5 to 10% by weight of silicon dioxide is added.

12. Method according to Claim 10 or 11, characterised in that the density of a low-water manganese nitrate melt with manganese dioxide and silicon dioxide added is adjusted to approximately 2.0 to 2.6 g/cm³ by adding distilled water.

13. Method according to one of Claims 10 to 12, characterised by the use of silicon dioxide which has been produced from SiCl₄ by oxyhydrogen gas hydrolysis and has a particle size of 7 to 40 nm.

## Revendications

1. Procédé pour fabriquer une couche en bioxyde de manganèse de condensateurs à électrolyte solide, comportant un corps d'anode fritté formé par un métal pour soupapes, une couche d'oxyde disposée sur le corps d'anode et utilisée comme diélectrique, une couche d'électrolyte semiconducteur, disposée sur la couche d'oxyde et formée par du bioxyde de manganèse et que l'on forme au moyen d'une immersion répétée dans une solution ou une masse fondue contenant du nitrate de manganèse et par dissociation pyrolytique ultérieure, une couche de graphite disposée sur la couche de bioxyde de manganèse, et une couche apte à réaliser un brasage tendre et disposée sur la couche de graphite, et selon lequel on remplit complètement avec du bioxyde de manganèse tout d'abord les pores présentes à l'intérieur des corps frittés, par pyrolyse de solutions contenant du nitrate de manganèse, en immergeant un à trois fois les corps frittés formés, dans du nitrate de manganèse et en exécutant, après chaque opération d'immersion, la dissociation thermique du nitrate de manganèse à des températures de 200-350°C, et selon lequel ensuite on immerge des corps frittés à une ou plusieurs reprises dans un mélange constitué par une masse fondue, de nitrate de manganèse et de poudre de bioxyde de manganèse, contenant peu d'eau, et en exécutant, après chaque immersion, la pyrolyse dans un four, par le fait qu'on chauffe tout d'abord les corps frittés dans une atmosphère sèche pendant quelques secondes à environ 100°C et qu'ensuite on dépose de fines gouttelettes d'eau sur la surface des corps frittés chauffés et qu'on arrête la pyrolyse en faisant circuler un brouillard de vapeur d'eau.

2. Procédé suivant la revendication 1, caractérisé par le fait qu'avant leur immersion dans le mélange formé d'une masse fondue de nitrate de manganèse et de poudre de bioxyde de manganèse, contenant peu d'eau, on immerge les corps frittés une ou plusieurs fois dans une masse fondue de nitrate de manganèse contenant peu d'eau et ne comportant aucun additif formé de bioxyde de manganèse, et qu'après chaque immersion, on soumet les corps frittés à une pyrolyse identique à celle exécutée après l'immersion dans le mélange.

3. Procédé suivant la revendication 1 ou 2, caractérisé par le fait que le brouillard de vapeur d'eau est guidé par des tôles de guidage de l'air disposées dans le four, de manière à empêcher le lavage des corps frittés par le jet des gouttelettes d'eau.

4. Procédé suivant l'une des revendications 1 à 3, caractérisé par le fait qu'on introduit les corps frittés dans le four, sans séchage préalable.

5. Procédé suivant l'une des revendications 1 à 4, caractérisé par le fait qu'après le remplissage des pores présentes à l'intérieur du corps fritté, on exécute un formage intermédiaire au cours d'éventuellement plusieurs étapes d'immersion et de pyrolyse avant la fabrication des couches de bioxyde de manganèse à partir d'une masse fondue de nitrate de manganèse, contenant peu d'eau.

6. Procédé suivant l'une des revendications 1 à 5, caractérisé par le fait qu'on mélange à la masse fondue de nitrate de manganèse 40 à 60 pour cent en poids de particules de bioxyde de manganèse.

7. Procédé suivant la revendication 6, caractérisé par l'utilisation de particules de bioxyde de manganèse possédant une granulométrie ≦ 180 µm.

8. Procédé suivant l'une des revendications 1 à 7, caractérisé par le fait que pour le remplissage des pores, on utilise une solution de nitrate de manganèse possédant une densité comprise entre environ 1,1 et 1,4 g/cm³.

9. Procédé suivant l'une des revendications 1 à 8, caractérisé par l'utilisation d'une masse fondue contenant peu d'eau et possédant une densité comprise entre environ 1,8 et 2,0 g/cm³.

10. Procédé suivant l'une des revendications 1 à 9, caractérisé par le fait qu'on mélange du bioxyde de silicium au moins à l'une des solutions de nitrate de manganèse et/ou des masses fondues.

11. Procédé suivant la revendication 10, caractérisé par le fait qu'on ajoute en mélange du bioxyde de silicium 0,5 à 10 pour cent en poids de bioxyde de silicium.

12. Procédé suivant la revendication 10 ou 11, caractérisé par le fait qu'on règle la densité d'une masse fondue de nitrate de manganèse contenant de l'eau, qui contient un additif de bioxyde de manganèse et de bioxyde de silicium, entre environ 2,0 et 2,6 g/cm³ par addition d'eau distillée.

13. Procédé suivant l'une des revendications 10 à 12, caractérisé par l'utilisation d'oxyde de silicium, qui est fabriqué par hydrolyse de gaz oxhydrique à partir de SiCl₄ et qui possède une granulométrie comprise entre 7 et 40 nm.
